# EUROPÄISCHE PATENTANMELDUNG

(11) **EP 2 719 865 A1**
(43) Veröffentlichungstag der Anmeldung: **16.04.2014**
(21) Anmeldenummer: 12188305.2
(22) Anmeldetag: 12.10.2012
(51) Int. Cl.: F01D 5/30

(54) **Einlage für Schaufel-Scheiben-Verbindungen von Strömungsmaschinen**

(71) Anmelder: MTU Aero Engines AG, 80995 München (DE)
(72) Erfinder: Werner, André, Dr., 80639 München (DE)

(57) **Zusammenfassung**

Die vorliegende Erfindung betrifft eine Einlage für eine Schaufel - Scheiben - Verbindung einer Strömungsmaschine, die einen an die Konturen eines Schaufelfußes und einer Scheibenaufnahme angepassten Einlagenkörper aufweist, wobei der Einlagenkörper aus einem Fasermaterial und/oder Schaummaterial gebildet ist und einen Schmierstoff aufweist.

## Beschreibung

### GEBIET DER ERFINDUNG

Die vorliegende Erfindung betrifft eine Einlage für eine Schaufel - Scheiben - Verbindung einer Strömungsmaschine, wie beispielsweise einer stationären Gasturbine oder eines Flugtriebwerks.

### STAND DER TECHNIK

Bei Strömungsmaschinen, wie stationären Gasturbinen oder Flugtriebwerken, sind eine Vielzahl von Rotoren vorgesehen, die eine Scheibe umfassen, an deren Umfang eine Vielzahl von Scheibennuten ausgebildet sind, in die Schaufelfüße von entsprechenden Rotorschaufeln angeordnet werden können. Beim Betrieb der Strömungsmaschine kommt es durch die hohen Drehzahlen und Fliehkräfte zu einer starken Belastung an den Verbindungsstellen, was insbesondere beim Einsatz wenig duktiler Werkstoffe, wie beispielsweise von Werkstoffen auf Basis von intermetallischen Verbindungen, wie beispielsweise TiAl, oder von keramischen Werkstoffen zu hohen Spannungen führen kann. Dies gilt insbesondere bei Linien - oder Punktkontakten zwischen den Schaufeln und der Scheibe in den Verbindungsbereichen aufgrund von Fertigungstoleranzen. Darüber hinaus können Spannungsspitzen auch durch stoßartige Belastungen beim Betrieb und der Montage auftreten.

Um zu vermeiden, dass es durch die entsprechenden Spannungsspitzen zu Beschädigungen der Scheibe oder der Schaufeln kommt, ist es bekannt, Einlagen zwischen dem Schaufelfuß und der Scheibennut anzuordnen, welche die auftretenden Kräfte elastisch und/oder plastisch aufnehmen kann. Beispiele hierfür sind in der US 3,784,320, EP 341 455 B1, US 5,160,243 und US 6,431,835 sowie der DE 210 81 76, US 2007/0048142 Al und US 2009/0060745 A1 beschrieben.

Darüber hinaus kann durch das Vorsehen entsprechender Einlagen und die Optimierung der Reibverhältnisse zwischen den einzelnen Oberflächen der Einlage und der Schaufelfüße sowie der Scheibennuten, in denen die Schaufelfüße aufgenommen sind, auch der Verschleiß minimiert werden. Hierzu ist es beispielsweise bekannt, die Oberflächen der Einlagen in geeigneter Weise zu beschichten. Auch dies ist teilweise in dem oben genannten Stand der Technik beschrieben.

### OFFENBARUNG DER ERFINDUNG

### AUFGABE DER ERFINDUNG

Obwohl mit den bekannten Einlagen für Schaufel - Scheiben - Verbindungen bereits erhebliche Vorteile verbunden sind, besteht weiterhin der Bedarf, die Einlagen dahingehend zu optimieren, dass sie ihre Funktion in einfacher und effektiver Weise bereitstellen, wobei gleichzeitig die Lebensdauer der entsprechenden Einlagen weiter verbessert werden soll.

### TECHNISCHE LÖSUNG

Diese Aufgabe wird gelöst durch eine Einlage mit den Merkmalen des Anspruchs 1. Vorteilhafte Ausgestaltungen sind Gegenstand der abhängigen Ansprüche.

Die vorliegende Erfindung geht aus von der Einlage, wie sie in der DE 210 81 76 A beschrieben ist. Nach diesem Stand der Technik wird eine Einlage aus einem Faserfilz vorgeschlagen, der aus einer Vielzahl von miteinander durch Sintern verbundenen Metallfasern aus einer Kobalt - Basis - oder einer Nickel - Basis - Legierung gebildet ist. Durch den Faserfilz ist eine Elastizität der Einlage gegeben, mit der die Spannungsspitzen in der Schaufel - Scheibe - Verbindung abgebaut werden können.

In Weiterentwicklung einer derartigen Einlage wird nunmehr vorgeschlagen, ein Fasermaterial, wie beispielsweise einen Faserfilz, aber auch ein sonstiges Gewirk, Gestricke oder Gewebe oder ein Verbundmaterial mit Fasern in Kombination mit einem Schmierstoff vorzusehen, sodass durch den Schmierstoff ein verbessertes Gleiten der Einlage an den angrenzenden Oberflächen des Schaufelfußes und/oder der Scheibe gegeben ist, denn es hat sich gezeigt, dass trotz der durch die Faserstruktur bedingten, geringen Anlagefläche eine Verbesserung der Gleitung vorteilhaft ist.

Der Schmierstoff kann in das Fasermaterial infiltriert werden, so dass einerseits ein leichteres Gleiten der Fasern gegeneinander und/oder gegenüber dem Schaufelfuß und/oder Schaufelfußaufnahme der Scheibe möglich ist und dass andererseits die Fasermaterialien durch den Schmierstoff vor Oxidation und/oder Korrosion geschützt sind, sodass die Lebensdauer der Einlage verbessert werden kann.

Gleichzeitig wird vorgeschlagen, in Kombination mit oder alternativ zu einem Fasermaterial ein Schaummaterial einzusetzen, wie beispielsweise einen Metallschaum, wobei das Schaummaterial durch den porösen Aufbau, durch den ein Schaummaterial definiert ist, ebenfalls eine erhöhte Elastizität aufweist. Zudem ermöglicht auch der poröse Aufbau des Schaummaterials die Aufnahme eines entsprechenden Schmierstoffs mit den beschriebenen Vorteilen.

Alternativ zu einer Infiltration des Faser- und/oder Schaummaterials mit einem Schmierstoff kann auch eine Umhüllung um das Faser- und/oder Schaummaterial vorgesehen werden, um auf diese Weise das Faser- bzw. Schaummaterial vor Oxidation und/oder Korrosion zu schützen und eine geeignete Anordnung des Schmierstoffs zu ermöglichen. In diesem Fall kann der Schmierstoff an der Außenseite der Umhüllung vorgesehen werden kann, sodass trotz eines elastischen Kerns durch die fasrige und/oder poröse Struktur eine glatte Gleitfläche für die umgebenden Oberflächen bereitgestellt werden kann.

Die Umhüllung kann das Faser- und/oder Schaummaterial insbesondere vollständig umgeben und durch eine metallische Folie gebildet sein, die wie das Fasermaterial und/oder das Schaummaterial aus einer Nickel - Basis -, einer Eisen - Basis - oder einer Kobalt - Basis - Legierung oder einem hochlegierten rostfreien Stahl gebildet sein kann. Unter hochlegiertem Stahl wird hierbei ein Stahl verstanden, der mehr als 5 Gew.-% an absichtlich zugesetzten Legierungselementen umfasst.

Die Umhüllung kann mit dem Faser- und/oder Schaummaterial durch Sintern stoffschlüssig verbunden sein. Dies ist vorteilhaft, da damit eine stoffschlüssige Verbindung besonders einfach hergestellt werden kann. Allerdings sind auch andere Verfahren zur stoffschlüssigen Verbindung denkbar.

Wie bereits erwähnt, kann das Fasermaterial ein Faserverbundmaterial, ein Gewebe, ein Gewirke, ein Gestricke oder ein Filz sein, wobei die einzelnen Fasern bei Bedarf ebenfalls durch stoffschlüssige Verbindung, wie beispielsweise durch Sintern, an Berührungspunkten miteinander verbunden sein können.

Die Fasern können einen Durchmesser im Bereich von 1 µm bis 150 µm, insbesondere 5 µm bis 100 µm, aufweisen.

Der Schmierstoff kann ein Feststoffschmiermittel sein, wie beispielsweise, Bornitride, insbesondere hexagonales Bornitrid, Graphit oder Kalziumfluorid.

Der Schmierstoff kann auch durch Oxide gebildet sein oder diese umfassen, wobei die Oxide auch durch Oxidation der Umhüllung erzeugt werden können, und zwar sowohl vor der Herstellung der Einlage als auch danach.

Die Einlage kann mindestens ein Formschlusselement oder ein als Formschlusselement vorgesehenes Element aufweisen, um eine formschlüssige Verbindung zwischen der Einlage und einem Schaufelfuß und/oder einer Schaufelfußaufnahme der Scheibe auszubilden. Die als Formschlusselement vorgesehenen Elemente können bei der Herstellung der Verbindung zwischen Einlage und Schaufelfuß oder Schaufelfußaufnahme der Scheibe in die entsprechende formschlüssige Position gebracht werden, beispielsweise durch Biegen oder Bördeln.

### KURZBESCHREIBUNG DER FIGUREN

Die beigefügten Zeichnungen zeigen in rein schematischer Weise in
Fig. 1 in den Teilbildern a), b) und c) die Darstellung einer Turbinenschaufel mit einem Schaufelfuß und einer erfindungsgemäßen Einlage sowie die Anordnung der Einlage zwischen Schaufelfuß und einer Scheibennut einer Scheibe eines Flugtriebwerks;
Fig. 2 eine Querschnittansicht durch eine erste Ausführungsform einer erfindungsgemäßen Einlage;
Fig. 3 eine Querschnittansicht durch eine zweite Ausführungsform einer erfindungsgemäßen Einlage;
Fig. 4 eine perspektivische Darstellung eines Schaufelfußes mit einer dazugehörigen dritten Ausführungsform einer erfindungsgemäßen Einlage;
Fig. 5 eine perspektivische Darstellung eines Schaufelfußes und einer vierten Ausführungsform einer dazugehörigen Einlage; und in
Fig. 6 eine perspektivische Darstellung einer fünften Ausführungsform einer erfindungsgemäßen Einlage sowie eine Darstellung eines da zugehörigen Details.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele deutlich, wobei die Erfindung nicht auf diese Beispiele beschränkt ist.

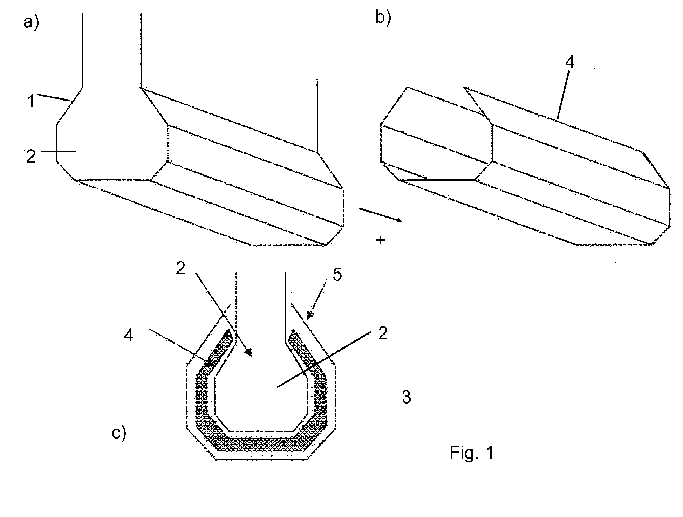

Die Fig. 1 zeigt im Teilbild a) eine rein schematische, perspektivische Teildarstellung einer Triebwerksschaufel 1, wie sie in einem Flugzeugtriebwerk oder auch in einer stationären Gasturbine eingesetzt werden kann. Der Schaufelfuß 2 weist eine Form auf, die komplementär zu einer Scheibennut 5 ist, welche in einer Scheibe 3 der Strömungsmaschine angeordnet ist (s. Teilbild c)), um den Schaufelfuß 2 aufzunehmen. Um den Verschleiß zwischen dem Schaufelfuß 2 und der Scheibennut 5 bzw. der Scheibe 3 zu verringern, ist eine Einlage 4, wie sie im Teilbild b) dargestellt ist, zwischen dem Schaufelfuß 2 und der Scheibennut 5 der Scheibe 3 angeordnet. Entsprechend weist die Einlage 4 eine Form auf, die komplementär zu der äußeren Form des Schaufelfußes 2 und der Innenkontur der Scheibennut 5 ist.

Im gezeigten Ausführungsbeispiel ist die Einlage 4 rein schematisch in einer im Querschnitt mehreckigen Zylinderform dargestellt, die sowohl an den Stirnseiten als auch im Bereich der Mantelfläche offen ist, um im angeordneten Zustand zwischen Schaufelfuß 2 und Scheibennut 5 eine Ausnehmung für das Schaufelblatt bereitzustellen. Die stirnseitigen Öffnungen dienen dazu, dass die Einlage über dem Schaufelfuß 2 geschoben werden kann, und zwar entlang der axialen Richtung x, die im Teilbild a) mit einem entsprechenden Pfeil gekennzeichnet ist und der axialen Richtung der Strömungsmaschine entspricht.

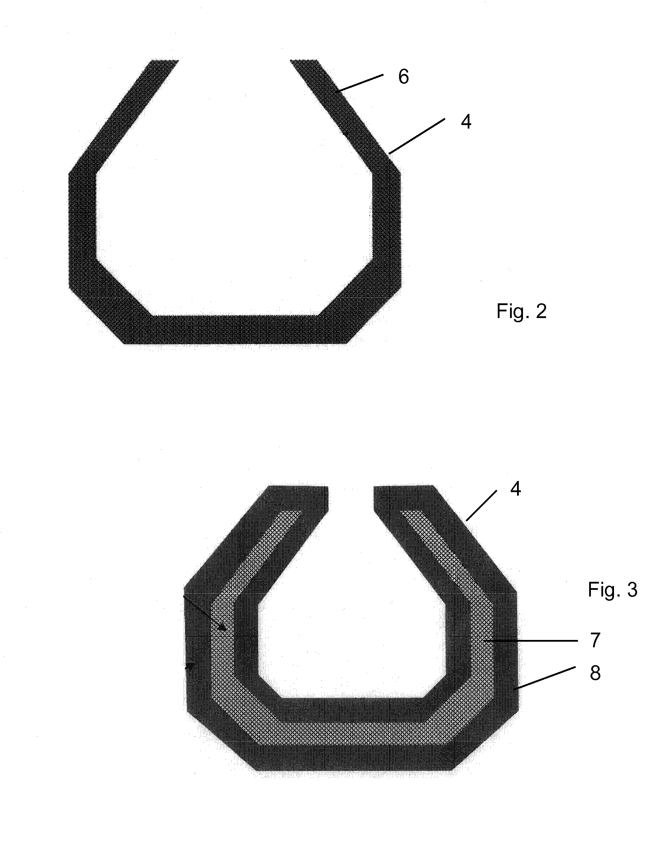

Die Fig. 2 zeigt eine erste erfindungsgemäße Ausführungsform der Einlage 4 im Querschnitt. Bei der gezeigten Ausführungsform ist die Einlage 4 bzw. deren Einlagenkörper 5 aus einem Fasermaterial oder einem Schaummaterial gebildet, welches mit einem Schmierstoff infiltriert ist. Das Fasermaterial kann durch ein Gewebe, ein Gewirk, oder ein Gestricke sowie ein Filz gebildet sein. Darüber hinaus kann das Fasermaterial auch durch einen porösen Faserverbundwerkstoff gebildet sein, bei welchem die Fasern in einer porösen Matrix aufgenommen sind, wie beispielsweise einem Metallschaum oder dergleichen.

Die Fasern des Fasermaterials können gegenseitig durch stoffschlüssige Verbindung, beispielsweise mittels Sintern, miteinander verbunden sein. Beim Schaummaterial kann es sich um einen Metallschaum handeln, der entsprechend einen porösen Aufbau aufweist.

In das Faser- und/oder Schaummaterial ist ein Schmierstoff infiltriert, wie beispielsweise ein Feststoffschmiermittel, wie hexagonales Bornitrid. Durch den infiltrierten Schmierstoff wird zum einen erreicht, dass die Fasern bei Belastung sich leicht gegeneinander bewegen, also aufeinander gleiten können, und dass sie zum anderen auch leicht gegenüber dem Schaufelfuß und der Scheibennut gleiten können. Darüber hinaus bietet der Schmierstoff einen Schutz vor korrosivem bzw. oxidativem Angriff des Faser- und/oder Schaummaterials.

Die Fig. 3 zeigt eine weitere Ausführungsform einer erfindungsgemäßen Einlage 4, bei welcher der Einlagenkörper aus einem Faser- und/oder Schaumkern 7 und einer Umhüllung 8 ausgebildet ist. Die Umhüllung 8 kann durch eine Folie, wie beispielsweise eine metallische Folie, gebildet sein. Der Faser- und/oder Schaumkern 7 kann wiederum in der gleichen Weise wie der Einlagenkörper 5 des Ausführungsbeispiels der Fig. 2 ausgebildet sein. Allerdings kann auf die Infiltration des Schmierstoffs verzichtet werden, da durch die Umhüllung 8 ein entsprechender Oxidations- und/oder Korrosionsschutz gegeben ist.

Darüber hinaus ist bei der Ausführungsform der Fig. 3 ein Schmierstoff an der Umhüllung 8 vorgesehen, wobei es sich auch hier um ein Feststoffschmiermittel handeln kann.

Das Feststoffschmiermittel an der Umhüllung 8 kann auch durch eine Oxidschicht gebildet sein, die durch Oxidation der Umhüllung erzeugt wird.

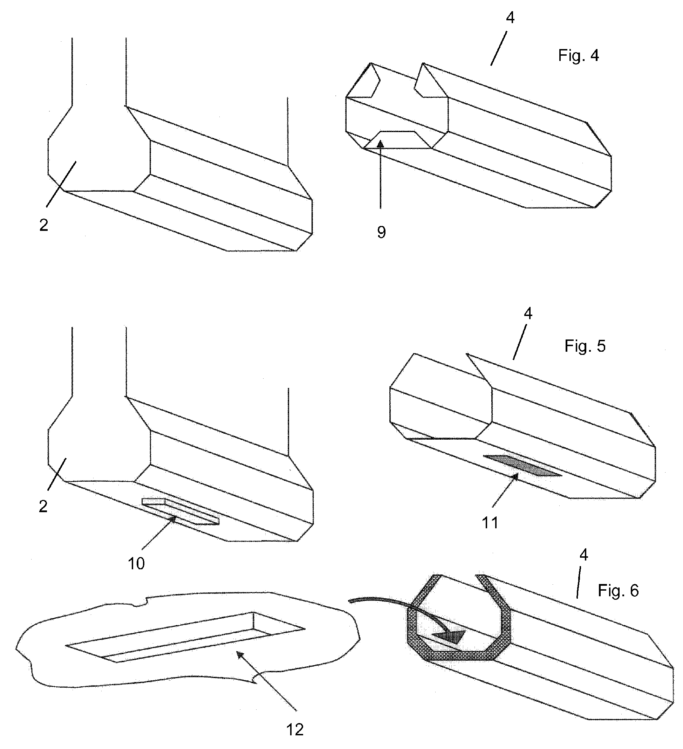

Die Fig. 4 zeigt einen weitere Ausführungsform einer erfindungsgemäßen Einlage 4, die an der Stirnseite Formschlusselemente 9 zur axialen Fixierung der Einlage aufweist. Beim Ausführungsbeispiel der Fig. 4 handelt es sich um Laschen 9, die teilweise in die stirnseitige Öffnung der Einlage 4 hineinragen und dadurch entsprechend in Anlage mit dem Schaufelfuß gelangen können. Auf diese Weise ist zumindest in einer Richtung parallel zur axialen Richtung eine formschlüssige Verbindung zwischen der Einlage 4 und dem Schaufelfuß 2 gegeben.

Die Formschlusselemente in Form der Laschen 9 können auch erst unmittelbar beim Einbau in die entsprechende formschlüssige Position umgebogen werden. Dies gilt insbesondere dann, wenn an beiden Stirnseiten der Einlage 4 entsprechende Formschlusselemente vorgesehen sind, so dass nach dem Einbau des Schaufelfußes 2 in die Einlage 4 dieser nicht mehr von dem Schaufelfuß entfernt werden kann.

Die Fig. 5 zeigt ein weiteres Ausführungsbeispiel einer erfindungsgemäßen Einlage 4 im Zusammenhang mit einem entsprechend angepassten Schaufelfuß 2. Wie der Fig. 5 zu entnehmen ist, weist der Schaufelfuß 2 an seiner Unterseite einen plattenförmigen Vorsprung auf, wobei die Einlage 4 an der entsprechenden Seite eine Aussparung 11 umfasst, in die der plattenförmige Vorsprung 10 eingreifen kann, wenn die Einlage 4 am Schaufelfuß 2 angeordnet ist. Daher ergibt sich wiederum ein formschlüssiger Verbund zwischen Einlage 4 und Schaufelfuß 2.

Eine Alternative zu dem Vorsehen einer Aussparung an der Einlage 4 ist in der Fig. 6 zu sehen, wo dargestellt ist, dass an der betreffenden Innenseite der Einlage die Einlage 4 mit einer eingepressten Nut 12 versehen ist, so dass auch hier die vorspringende Platte 10 einen Formschluss zwischen Schaufelfuß 2 und Einlage 4 ermöglicht.

Obwohl die vorliegende Erfindung anhand der Ausführungsbeispiele detailliert beschrieben worden ist, ist für einen Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden. Insbesondere umfasst die vorliegende Offenbarung sämtliche Kombinationen aller vorgestellten Einzelmerkmale.

## Patentansprüche

1. Einlage für eine Schaufel - Scheiben - Verbindung einer Strömungsmaschine, die einen an die Konturen eines Schaufelfußes und einer Scheibenaufnahme angepassten Einlagenkörper aufweist, wobei der Einlagenkörper aus einem Fasermaterial und/oder Schaummaterial gebildet ist und einen Schmierstoff aufweist.

2. Einlage nach Anspruch 1,
**dadurch gekennzeichnet, dass**
das Fasermaterial und/oder das Schaummaterial mit einem Schmierstoff infiltriert ist.

3. Einlage nach Anspruch 1,
**dadurch gekennzeichnet, dass**
das Fasermaterial und/oder das Schaummaterial zumindest teilweise mit einer Umhüllung versehen ist, an deren Außenseite der Schmierstoff angeordnet ist.

4. Einlage nach Anspruch 3,
**dadurch gekennzeichnet, dass**
die Umhüllung das Faser - und/oder Schaummaterial vollständig umgibt.

5. Einlage nach einem der Ansprüche 3 oder 4,
**dadurch gekennzeichnet, dass**
die Umhüllung aus einer metallischen Folie, insbesondere aus Ni -, Fe - , Co - Basislegierungen oder hochlegierten, rostfreien Stählen gebildet ist.

6. Einlage nach einem der Ansprüche 3 bis 5,
**dadurch gekennzeichnet, dass**
die Umhüllung mit dem Faser - und/oder Schaummaterial durch Sintern verbunden ist.

7. Einlage nach einem der vorhergehenden Ansprüche,
**dadurch gekennzeichnet, dass**
das Fasermaterial ein Faserverbundmaterial, ein Gewebe, ein Gewirk, ein Gestricke oder ein Filz ist.

8. Einlage nach einem der vorhergehenden Ansprüche,
**dadurch gekennzeichnet, dass**
das Fasermaterial aus metallischen Fasern gebildet ist, insbesondere aus Ni -, Fe - , Co - Basislegierungen oder hochlegierten, rostfreien Stählen.

9. Einlage nach einem der vorhergehenden Ansprüche,
**dadurch gekennzeichnet, dass**
das Fasermaterial aus Fasern gebildet ist, die einen Durchmesser im Bereich von 1 µm bis 150 µm, insbesondere 5 µm bis 100 µm aufweisen.

10. Einlage nach einem der vorhergehenden Ansprüche,
**dadurch gekennzeichnet, dass**
das Schaummaterial ein Metallschaum, insbesondere aus Ni -, Fe - , Co - Basislegierungen oder hochlegierten, rostfreien Stählen ist.

11. Einlage nach einem der vorhergehenden Ansprüche,
**dadurch gekennzeichnet, dass**
der Schmierstoff ein Feststoffschmiermittel, insbesondere Bornitride, hexagonales Bornitrid, Graphit oder Kalziumfluorid ist.

12. Einlage nach einem der vorhergehenden Ansprüche,
**dadurch gekennzeichnet, dass**
die Einlage mindestens ein Formschlusselement oder als Formschlusselement vorgesehenes Element zur Verbindung mit einem Schaufelfuß und/oder einer Scheibenaufnahme aufweist.
